# EUROPEAN PATENT APPLICATION

(11) **EP 2 199 906 A1**
(43) Date of publication of application: **23.06.2010**
(21) Application number: 09009756.9
(22) Date of filing: 28.07.2009
(51) Int. Cl.: G06F 9/45, G06F 9/44

(54) **Path navigation in abstract syntax trees**

(30) Priority: 17.12.2008 US 337582
(71) Applicant: SAP AG, 69190 Walldorf (DE)
(72) Inventor: Bohlmann, Karsten, 69190 Walldorf (DE); Berthelot, Gilles, 69190 Walldorf (DE); Wedler, Christoph, 69190 Walldorf (DE); Zhou, Xiwei, 69190 Walldorf (DE)
(74) Representative: Müller-Boré & Partner Patentanwälte

(57) **Abstract**

The subject matter disclosed herein provides methods and apparatus, including computer program products, for navigating abstract syntax trees. In one aspect there is provided a method. The method may include receiving a plurality of nodes, the nodes configured as an abstract syntax tree representing program code. The method may also include identifying at least one node from the plurality of nodes by navigating the plurality of nodes using a path expression. Related systems, apparatus, methods, and/or articles are also described.

## Description

### FIELD

This disclosure relates generally to data processing and, more particularly, to navigation in abstract syntax trees.

### BACKGROUND

An abstract syntax tree (AST) is a tree representation of the syntax of program code. Each node of the AST represents a construct occurring in the program code. The tree is abstract in the sense that it may not represent some constructs that appear in the original program code. For example, grouping parentheses used in the program code are not typically included in AST. An AST is usually built by a parser as part of the processing of source code. The parser is integrated in a compiler for the programming language and is complemented by semantic analysis, which adds further information to the AST. The AST may also be used by other language related tools, such as the calculation of code metrics. For this class of programs working on an AST, it is significant what access mechanisms are available. Traditional approaches to AST access are based on a primitive tree programming interface, or on a "visitor" pattern which allows them to traverse (parts of) the tree in a mostly predefined manner.

### SUMMARY

The subject matter disclosed herein provides methods and apparatus, including computer program products, for navigation with an abstract syntax tree.

In one aspect there is provided a method. The method may include receiving a plurality of nodes, the nodes configured as an abstract syntax tree representing program code. The method may also include identifying at least one node from the plurality of nodes by navigating the plurality of nodes using a path expression.

In some implementations, the subject matter described herein provides the advantage of a variety of navigation possibilities of an abstract syntax tree, with the expressive power of a declarative language. This combination facilitates the definition of algorithms on source code, such as code metrics, or even of a compiler.

Articles are also described that comprise a tangibly embodied machine-readable medium embodying instructions that, when performed, cause one or more machines (e.g., computers, etc.) to result in operations described herein. Similarly, computer systems are also described that may include a processor and a memory coupled to the processor. The memory may include one or more programs that cause the processor to perform one or more of the operations described herein.

The details of one or more variations of the subject matter described herein are set forth in the accompanying drawings and the description below. Other features and advantages of the subject matter described herein will be apparent from the description and drawings, and from the claims.

### BRIEF DESCRIPTION OF THE DRAWING

These and other aspects will now be described in detail with reference to the following drawings.

FIG. 1 illustrates a system 100 for navigating, using path expressions, an abstract syntax tree;

FIG. 2 illustrates an example of an abstract syntax tree 200;

FIG. 3 depicts an example of an abstract syntax tree and the corresponding path expressions to navigate to each node; and

FIG. 4 depicts a process for navigating using an abstract syntax tree.

Like reference symbols in the various drawings indicate like elements.

### DETAILED DESCRIPTION

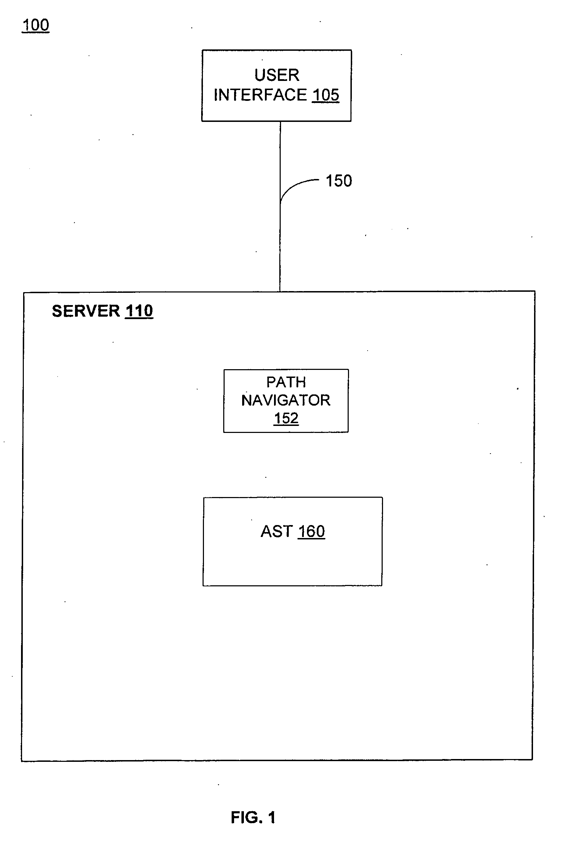

FIG. 1 depicts a system 100 for navigating an abstract syntax tree (AST) 160. Navigation refers to a function to retrieve nodes from the AST, given one or several nodes to start a search of the AST, and specifications to identify the searched nodes by position or by properties. The system 100 includes a user interface 105 and a server 110, which are coupled by communication link 150, such as the Internet, an intranet, or any other link. Server 110 further includes a path navigator 152 for navigating AST 160 based on path expressions (which are described further below). The path expressions configure navigation of AST 160 to enable selection (e.g., identification) of a node of AST 160.

User interface 105 may be implemented as any type of interface mechanism for a user, such as a Web browser, a client, a smart client, a mobile wireless device (e.g., a personal digital assistant, a phone, and the like), and any other presentation and/or interface mechanism. For example, the user interface 105 may be implemented as a processor (e.g., a computer) including a Web browser to provide access to the Internet (e.g., via using communication link 150) to interface to (and/or access) server 110. User interface 105 may be used to access (and/or configure) server 110, path navigator 152, and AST 160, provide expressions for navigating AST 160, present pages (e.g., hyper text mark up language pages) including information regarding the AST 160 or measurements, analysis, and the like performed on the AST 160.

Server 110 may be implemented as a processor (e.g., a computer, a blade, and the like). Server 110 may further include a parser to parse source code into AST 160 and, as noted above, a path navigator 152.

The subject matter described herein relates to navigating the AST 160 using expressions evaluated at the path navigator 152. These expressions (referred to herein as path expressions) are used to navigate the AST 160. For example, path expressions may be used to access and identify nodes, parents of a node, child nodes, nodes that satisfy a given test, nodes that satisfy a given property, and the like. In some implementations, the path expressions use a syntax that is similar to that of XPATH, while the semantics are exchanged to work on the new tree model. The path expressions may thus be used to select nodes from the AST 160.

The nodes of the AST 160 correspond to a parsed portion of program code, and, in some implementations, correspond to program code having a statement, argument, and clause construct. Although many of the examples herein are described within the context of ABAP, the subject matter described herein may be applied to any programming language because every programming language has an abstract syntax such that programs can be represented by ASTs. Moreover, the subject matter described herein may be particularly beneficial for so-called "rich" languages, i.e. languages with a large set of constructs with complex substructures. ABAP (commercially available from SAP AG) is an example of a rich language.

The proposed path expressions reflect a meta-syntax, which is imposed on the syntax of the source programming language. This meta-syntax is comprised of statements, clauses, and arguments. A statement is an independent source code entity. The statement may be a "compound" statement that contains other statements (e.g., a LOOP, an IF, etc), or a "simple" statement (e.g., a READ). A clause is a syntactic entity that is a component of a statement or of another clause (e.g., FROM and TO as clauses of a LOOP). An argument is a syntactic entity that occurs inside a clause and usually has a recursive syntactic definition. Arguments correspond generally to what is usually called an expression (including, e.g., identifiers, arithmetic operators, logical operators, etc).

The path expressions enable path navigator 152 to navigate a path to nodes of the AST. For example, a location path is "expressed" by the path expression, which may be used by a source-code analysis tool to analyze the program code which has been parsed into the AST. The path expression is provided to a path navigator 152 for evaluation, which results in one or more nodes being identified and returned. Unlike past approaches (e.g., Path), the path expressions described herein work on an AST rather than XML trees. Moreover, unlike previous AST implementations, the subject matter described herein uses an expressive, declarative path language for navigation. Specifically, the path expressions used by path navigator 152 use the statement, clause, argument categorization to classify nodes to enable navigation of AST 160, which results in nodes being identified and returned.

Moreover, the change of the tree domain from XML to AST entails a change of the path-language's semantics concerning the information associated with a node. In XML trees, there are certain node types (e.g., an element, an attribute, and text). In ASTs, there are other node types classified as statements, clauses, and arguments. This tri-chotomy of statements-clauses-arguments is also reflected in the path language, where node tests are used for these specific types of nodes. As such, certain XPath syntax features may be used, which would otherwise have no use within the context of ASTs (e.g., namespace prefixes). Furthermore, the path expressions (which are described herein) use attributes to represent "properties" of nodes that are generally not reflected directly in the AST. These properties include classifications of nodes (e.g. "control-flow statement" vs. "database statement" or "input clause" vs. "result clause"). Moreover, the subject matter described herein provides a "limited (node) step", which is described further below. By this limited node step construct, navigation (e.g. along the "following" or "ancestor" axis) can be confined to a certain sub-tree of the AST. Thus, the retrieval of nodes may be limited using a path expression (e.g. limited to following nodes within a certain source module, or limited to ancestor nodes up to a certain statement).

Moreover, the path expressions described herein may be used to compute values (e.g., strings, numbers, or Boolean values) from nodes of the AST 160. Thus, the path expressions enable path navigator 152 to navigate around the AST 160 and select nodes based on one or more criteria, which are described below. As noted, in some implementations, the path expressions have a syntax that is compatible with a source language that has statements, clauses, and arguments (which is a syntax used by ABAP).

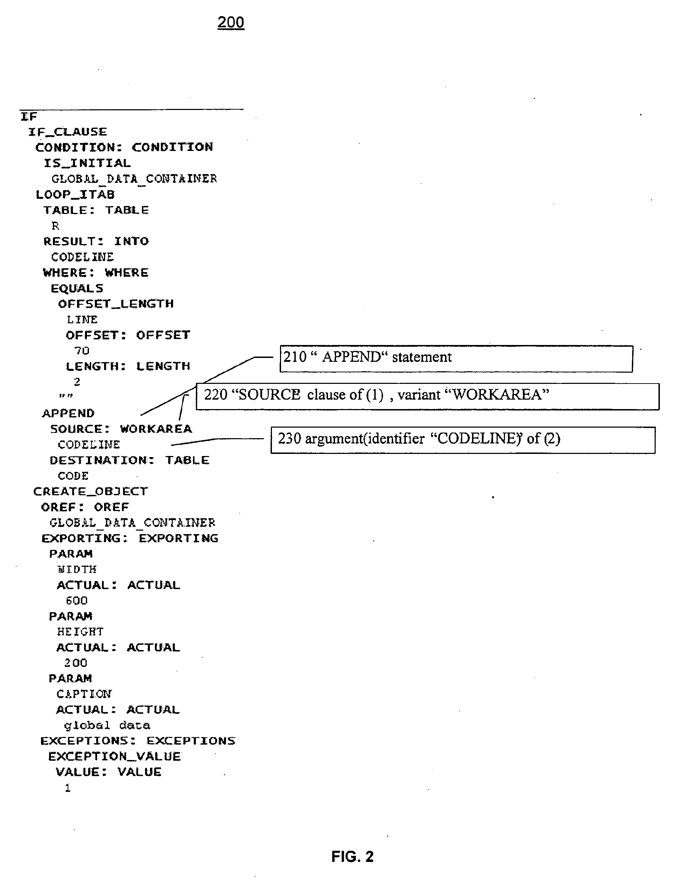

FIG. 2 depicts an example of AST 160 including ABAP statements, such as an append statement 210, clauses, such as source clause 220, and arguments, such as argument 230 (identifier "codeline"). AST 160 is only exemplary as other ASTs may be used as well.

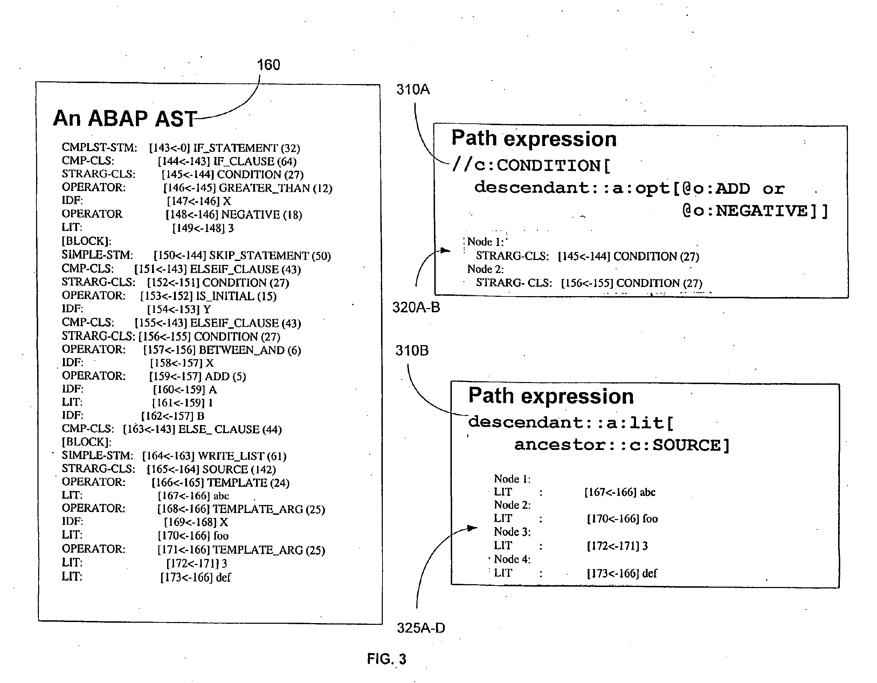

FIG. 3 depicts an example of AST 160 and path expressions 310A-B to identify the nodes 320A-B and 325A-D. The first path expression 310A represents a find all "CONDITION" clause that has a descendant argument node, which is an "ADD" or "NEGATIVE" operator. The second path expression 410B represents a find all argument nodes, which are literals and are contained in a "SOURCE" clause. The path expressions may be implemented to operate natively in a C++ AST model, as well as in other environments. In some implementations, the path navigator 152 may provide an application programming interface (API), which makes available methods to navigate AST 160.

The path expressions implemented by path navigator 152 to navigate AST 160 include one or more of the following features: a declarative language; types, such as value types (e.g.., a node set of AST nodes), Boolean logic (which may be used with filters), integer types (e.g. for counting), and string types (e.g. for literals)); evaluation in the context of an AST node; location steps (which can be limited as noted above) for finding all nodes reachable from a given node (e.g., a context node) on a specific axis (e.g., a parent, a child, and a descendant node axis); a filter for reducing a node set of AST 160 to nodes fulfilling one or more conditions; a path for combining a sequence of node selections; and logical and relational operators/functions.

Additional features of the path expressions may include one or more of the following expressions described below.

Path navigator 152 may use a statement-clause-argument syntax rather than an XML namespace. For example, to identify a node the following may be used:
s:INSERT_ITAB (→ statement), c:SOURCE (→ clause),
wherein s represents the node category "statement" and c represents the node category "clause". The node categories "s" and "c" are fixed with the source language's meta-syntax, as described above (although another node category is "a" for "argument"). For a language with a different meta-syntax, the categorization may be adapted (e.g. omit "c" for a language with only very primitive statements). The "INSERT_ITAB" is an example of a statement name, and "SOURCE" is an example of a clause name, both of which are in the abstract syntax of ABAP. This set of names is more exchangeable than the node categories because the node names correspond directly to the symbols in the language's abstract syntax. However, this set of names does not influence the implementation of the path expression language. The implementation is "parameterized" with these symbols (e.g., the path expressions may be loaded from a so-called "grammar" file, but the implementation does not depend on them except for the validation of names when they occur in path expressions).

Moreover, path navigator 152 may use an attribute axis for AST node properties. As mentioned above, the attribute axis is not used for existing tree nodes (e.g., as is the case in past approaches, such as XPath), but rather for access to certain node properties. One kind of property is the variant of a clause. Variants arise from alternatives in the language's grammar. For example, the SOURCE component of a statement may take two different forms, such as a WORKAREA and a TABLE. Then, WORKAREA and TABLE are "variants" of the "SOURCE" clause. The variant of a clause node can be checked by a node step on the attribute axis with prefix "v:" (which would be the namespace prefix in the XML model and is used for "node category" in the AST model) as follows:
c:SOURCE [@v:WORKAREA]
where "@v:..." is short for "attribute::v:".

Operators (e.g. arithmetic: '+', or relational: `>') in an AST are argument nodes which are matched by the node test "a:opt". For testing such a node against a specific operator (e.g. ADD, which would be the abstract-syntax name of'+'), the attribute axis is used with prefix "o:" as follows:
a: opt[@o:ADD].

The expression "*" can be used to express a generic step, i.e. absence of a node test, as follows:
GenericStep ::= [Axis::]* Filter*.

The "." (dot) represents self::* (the context node) and ".." (dot dot) represents parent::*. For example, the expression * identifies all child nodes of the context node (where child is the default axis), the expression ancestor::* identifies all ancestor nodes of the context node (starting with its parent, ending with the root), and the expression descendant-or-self::* identifies all nodes in the sub-tree of the context node (starting with itself).

The path expressions may support one or more of the following axes: self (the context node itself), child (immediate children of the context node), parent, descendant, descendant-or-self (context node plus its descendants), ancestor (ancestors), ancestor-or-self (context node plus its ancestors), following-sibling, preceding-sibling, following (nodes after the context node), and preceding (nodes before the context node).

To apply a logical or positional condition, a filter expression may be used, which may have the following form:
Filter ::= [Expression],
wherein this expression may be used to identify a node of the AST 160 satisfying an expression within the brackets. For example, the expression of *[1] identifies the first child node; the expression ancestor::*[2] identifies the grandparent; the expression *[*[2]] identifies all children with at least 2 children; and the expression *[count(*)=2][not(following-sibling::*)][1] identifies the first child node with exactly 2 children and no following siblings.

A path expression may also include a property expression to evaluate properties of nodes of AST 160, which may have the following form:
Property ::= @PropertyName.

A node inserted into AST 160 by the parser as a default may be identified using the property: @default. Other properties may be added as is appropriate for a specific source language. The set of properties can also be seen as a "parameter" to the path language implementation.

The path expressions may be used to return nodes of AST 160. For example, a statement step expression may be used to identify all nodes along an axis with a given statement name. The general syntax is as follows:
StatementStep ::= [Axis::]s:(StatementNamel*) Filter*,
wherein the prefix "s:" signifies the node category "statement". For example, the path expression s:INSERT_ITAB selects the child nodes of the context node representing an INSERT_ITAB statement. The expression "descendant::s:*[1]" selects the first descendant statement of the context node, and the expression "s:*[descendant-or-self::s:INSERT_ITAB][1]" selects the first child statement that is, or contains, an INSERT_ITAB statement.

To select the nodes of AST 160 representing clauses, the following path expression may be used:
ClauseStep ::= [Axis::]c:(ClauseName|*) Filter*,
wherein the prefix "c:" signifies the node category "clause". For example, c:* selects all clauses of the context node.

To select nodes of AST 160 based on variants, the following path expression may be used:
VariantTest ::= @v:VariantName,
wherein "@" is short for "attribute::" and the prefix "v:" signifies a variant test. For example, ancestor::c:SOURCE[@v:WORKAREA] identifies ancestor SOURCE clauses of the context node with variant "WORKAREA."

To select the nodes of AST 160 representing arguments, the following path expression may be used:
ArgumentStep ::= [Axis::]a:* Filter*
wherein the prefix "a:" signifies the node category "argument". For example, the expression descendant::a:* identifies all argument descendants of the context node.

To select the nodes of AST 160 representing identifiers, the following path expression may be used:
identifierStep ::= [Axis::]a:idf Filter*,
wherein the full-name "a:idf" signifies the node type "identifier". For example, the path expression of "descendant::a:idf" identifies all identifier-argument descendants of the context node.

To select the nodes of AST 160 representing literals, the following path expression may be used:
LiteralStep ::= [Axis::]a:lit Filter*,
wherein the full name "a:lit" signifies the node type "literal." For example, the expression "descendant::a:lit" identifies all literal-argument descendants.

To select the nodes of AST 160 representing an operator, the following path expression may be used:
OperatorStep ::= [Axis::]a:opt Filter*
wherein the full-name "a:opt" signifies the node type "operator." For example, the expression may take the form of "parent::a:opt" to step to the operator parent.

The following expression "OperatorTest ::= @o:OperatorName" may be used to test an operator node against a specific operator name.

A path expression may be used to define a relative path through the node of AST 160. The general syntax of such an expression is as follows:
RelativePath ::= Expression /[/] Expression,
wherein e1//e2 is an abbreviation for e1/descendant-or-self::*/e2. For example, the relative path to the SOURCE clause children of INSERT_ITAB statements may be defined as s:INSERT_ITAB/c:SOURCE.

A path expression may be used to define an absolute path through the nodes of AST 160. The general syntax of that expression is as follows:
AbsolutePath ::= /[[/] RelativePath]
wherein //e abbreviates /descendant-or-self::*/e. The AST root node may be accessed as "/"; the nodes representing top-level INSERT_ITAB statements may be defined as /s:INSERT_ITAB; nodes representing clauses of the first top-level INSERT_ITAB statement may be defined as /s:INSERT_ITAB[1]/c:*; and SOURCE clauses of all INSERT_ITAB statements in the tree may be defined as //s:INSERT_ITAB/c:SOURCE.

The path expressions also include unions, filter expressions, and bracketed expressions. For example, a union may be represented with the following expression: Union::= Expression Expression. A filter expression may be represented with the following: FilterExpression ::= Expression Filter+. A bracketed expression may be represented as follows: BracketedExpression ::= (Expression). For example, the expression "s:INSERT_ITAB | s:DELETE_ITAB" represents a logical OR (i.e., a union) of INSERT_ITAB and DELETE_ITAB statements. The expression "(s:INSERT_ITAB | s:DELETE_ITAB)[c:SOURCE]" represents a logical OR of the INSERT_ITAB and DELETE_ITAB statements with a SOURCE clause.

The path expressions may support other expressions, such as a logical expression LogicalExpr ::= Expression (and or) Expression), a relational expression (e.g., RelationalExpr ::= Expression (= | != |< | > | <= | >=) Expression), a string literal (e.g., StringLiteral ::= "car*" | 'Char*'), and an integer literal expression (e.g., IntegerLiteral ::= Digit+), all of which may be used to identify nodes with the given logic, relation, string, or integer expression.

Moreover, a function call may be used to identify nodes of AST 160, to retrieve certain node properties, to compute values (e.g. by concatenation of strings from the AST), and the like. For example, the function call Boolean(*) is true if the context node has a child. The function call not(parent::*) is true for the root node. The function call count(ancestor::*) yields the nesting depth of the context node, as it returns the number of its ancestors. The function call string() returns the string-value of a node (which is the identifier name for an identifier node, or the literal value for a literal node).

Built-in functions are defined in order to provide program-structure aware navigation and to access symbol-table information associated with the AST nodes. For example, the function "block" yields the node that is the root node of the source-code module (e.g. method or subroutine) that contains the context node. Another function provides navigation from an identifier usage to the identifier's declaration. Again, the concrete set of functions supported by an implementation depends on the entities that exist in the specific source language and on the entries which are made in the symbol table while building an AST for it.

The following feature relates to the above noted limited step. Specifically, the limited step feature may take the form of a function call, but is in fact a modifier on a navigation step, "NodeLimitedStep ::= limit( Expression, Step )," that limits the node search expressed by "Step" to a sub-tree defined by "Expression". Specifically, this affects the following navigation axes: "ancestor", "preceding-sibling", "following-sibling" (for these axes, node search ends at the node defined by "Expression"); "following", and "preceding" (for these axes, the search is confined to the sub-tree below the given node). For example, limit (block(), following:a:*) computes all following statements in the same block as the context node. And, the limit( $n, preceding-sibling::* ) expression yields all nodes between the node bound to variable $n and the context node.

Moreover, another feature is the top-limited step. The construct of the top-limited step is as follows: TopLimitedStep ::= top( Step). The top-limited step feature may be used to limit the node search on axes with a "descendant" node component (i.e., axes descendant, descendant-or-self, following, preceding). The top-limited step feature limits the search to unnested occurrences, i.e. it does not return nodes that are descendants of other nodes in the result set. For example, top(descendant::s:*[@cond] ) yields all unnested conditional statements below the context node (but not conditional statements nested in other conditional statements).

Another feature is the bottom-limited step. The bottom-limited step construct is an expression of the following form: BottomLimitedStep ::= bottom( Step). The bottom-limited step may be used to limit the node search on axes with a "descendant" node(s) component: descendant, descendant-or-self, following, preceding. The bottom-limited step limits the search to non-nesting occurrences, i.e. it does not return nodes that are ancestors of other nodes in the result set. For example, bottom (descendant::s:*[@cond] ) yields all conditional statements below the context node that do not contain other conditional statements.

Combining the above-noted constructs, the following node selection may be generated with a single path expression: "The maximum nesting depth of control-flow statements within loop statements," which is as follows:
max( descendant:::*[[@loop] /
   let( Ip, .,
   bottom( descendant::s:*[@flow]) /
   count( limit($Ip, ancestor-or-self::s:*[@flow]))))
wherein this expression first selects all statements with the "loop" property, then for each such statement (while binding it to variable $lp) selects the "leaf" descendant statements with the "flow" property, then for each such descendant counts the number of "flow" statements between it and the "loop" statement (stored in $lp), and finally computes the maximum of all these numbers.

Moreover, the path expressions may support variables (e.g., VariableReference ::= $VariableName) and binding (e.g., VariableBinding ::= let (VariableName, Expression, Expression). In addition, the path expressions may support conditions (e.g., Conditional::=if (Expression, Expression, Expression)). For example, the condition if(self::a:idf, idf-id(.), 0) provides an identifier id if the context node has an identifier and otherwise returns a zero.

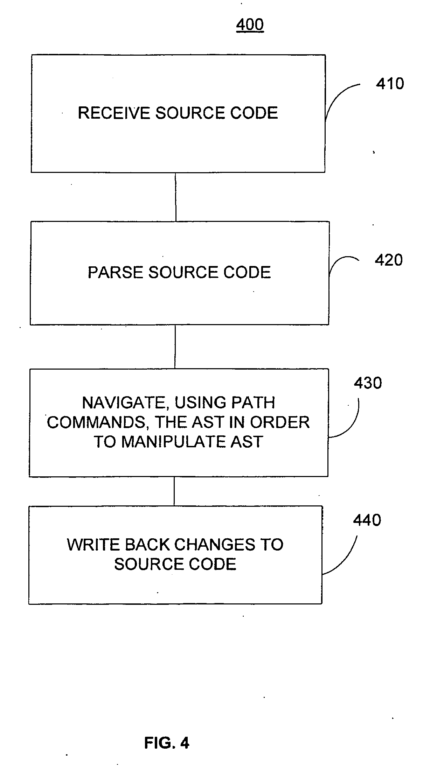

FIG. 4 depicts an exemplary process 400 for using the path expressions at system 100. The described process may be used in a variety of other mechanisms. For example, the process 400 may be used in conjunction with a "refactoring" tool, i.e., a program that analyzes source code and modifies it according to user specifications. Moreover, the process 400 may be used in conjunction with tools used for determining code metrics, i.e., a program that analyzes source code and outputs its results (e.g. statistics) to user interface 105.

At 410, server 110 receives source code, such as ABAP program code (although other types of code may be used as well). At 420, server 110 parses the source code into AST 160. For example, FIG. 2 depicts ABAP program code parsed in AST 160.

At 430, path navigator 152 is used to navigate AST 160 using the path expressions described herein. The navigation is used to identify a node, which may be selected for manipulation. In some implementations, the path expressions may be received at path navigator 152. The path expressions are used to navigate the AST 160, identify nodes, and return nodes. Moreover, the evaluation of a path, as expressed by the path expression to a given node, may be used to determine, e.g., code metrics (e.g., statistics).

At 440, any changes performed to the AST 160 may be written back to the original source code received at 410. For example, a node of AST 160 may be identified using a path expression at 430. The identified node is then manipulated (e.g., edited, modified, changed, replaced, and the like). The manipulated node of AST 160 is then converted back to source code, which replaces the original code received at 410. The modified source code may then be used.

The subject matter described herein may be embodied in systems, apparatus, methods, and/or articles depending on the desired configuration. In particular, various implementations of the subject matter described herein (including processes 500 as well as server 110 and path navigator 152) may be realized in digital electronic circuitry, integrated circuitry, specially designed ASICs (application specific integrated circuits), computer hardware, firmware, software, and/or combinations thereof. However, in a typical implementation, knowledge acquisition engine 150, CSR 152, and text searcher 154 are implemented as computer programs. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications, applications, components, or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

The implementations set forth in the foregoing description do not represent all implementations consistent with the subject matter described herein. Instead, they are merely some examples consistent with aspects related to the described subject matter. Wherever possible, the same reference numbers will be used throughout the drawings to refer to the same or like parts.

Although a few variations have been described in detail above, other modifications or additions are possible. In particular, further features and/or variations may be provided in addition to those set forth herein. For example, the implementations described above may be directed to various combinations and subcombinations of the disclosed features and/or combinations and subcombinations of several further features disclosed above. In addition, the logic flow depicted in the accompanying figures and/or described herein do not require the particular order shown, or sequential order, to achieve desirable results. Other embodiments may be within the scope of the following claims.

As used herein, the term "user" may refer to any entity including a person or a computer. As used herein a "set" can refer to zero or more items.

The foregoing description is intended to illustrate but not to limit the scope of the invention, which is defined by the scope of the appended claims. Other embodiments are within the scope of the following claims.

## Claims

1. A system comprising:
a processor; and
a memory, the processor and memory configured to perform a method, the method comprising:
receiving a plurality of nodes, the nodes configured as an abstract syntax tree representing program code; and
identifying at least one node from the plurality of nodes by navigating the plurality of nodes using a path expression.

2. The system of claim 1, wherein the path expression includes a limited step.

3. The system of claim 2, wherein the limited step yields one or more nodes between a node bound to a variable and a context node.

4. The system of any one of the preceding claims, wherein the path expression includes a top limited step.

5. The system of claim 4, wherein the top limited step limits a node search on axes of the abstract syntax tree, such that an unnested node is returned.

6. The system of any one of the preceding claims, wherein the path expression includes a bottom limited step.

7. The system of claim 6, wherein the bottom limited step yields conditional statements below a context node that does not contain other conditional statements.

8. A method for path navigation, the method being performed by execution of a computer readable program code by a processor of a computer, the method comprising:
receiving a plurality of nodes, the nodes configured as an abstract syntax tree representing program code; and
identifying at least one node from the plurality of nodes by navigating the plurality of nodes using a path expression.

9. The method of claim 8, wherein the path expression includes a limited step.

10. The method of claim 9, wherein the limited step yields one or more nodes between a node bound to a variable and a context node.

11. The method of any one of claims 8 to 10, wherein the path expression includes a top limited step.

12. The method of claim 11, wherein the top limited step limits a node search on axes of the abstract syntax tree, such that an unnested node is returned.

13. The method of any one of claims 8 to 12, wherein the path expression includes a bottom limited step, wherein the bottom limited step yields conditional statements below a context node that does not contain other conditional statements.

14. A computer-readable medium containing instructions to configure a processor to perform a method according to any one of claims 8 to 13.
